## Europäisches Patentamt
## European Patent Office
## Office européen des brevets

(11) Veröffentlichungsnummer: **0 105 949**
**B1**

(12) **EUROPÄISCHE PATENTSCHRIFT**

(45) Veröffentlichungstag der Patentschrift:
14.12.88

(21) Anmeldenummer: **82109419.0**

(22) Anmeldetag: **12.10.82**

(51) Int. Cl.⁴: **B 62 M 17/00**

(54) Fahrrad mit Wellenantrieb.

(43) Veröffentlichungstag der Anmeldung:
25.04.84 Patentblatt 84/17

(45) Bekanntmachung des Hinweises auf die Patenterteilung:
14.12.88 Patentblatt 88/50

(84) Benannte Vertragsstaaten:
AT BE CH DE FR GB IT LI LU NL SE

(56) Entgegenhaltungen:
EP-A-0 037 872
BE-A-456 288
DE-C-104 524
DE-C-404 387
GB-A-362 367

(73) Patentinhaber: **DÜRKOPPWERKE GMBH, Nikolaus-Dürkopp- Strasse 10, D-4800 Bielefeld 1 (DE)**

(72) Erfinder: **Fenzl, Horst, Auf dem Berge 14, D-4811 Oerlinghausen (DE)**

(74) Vertreter: **Rehmann, Klaus H., Postfach 1310 Hauptbahnhofstrasse, D-8720 Schweinfurt (DE)**

LIBER, STOCKHOLM 1988

## Beschreibung

Die Erfindung betrifft ein Fahrrad mit Wellenantrieb. Fahrräder mit Wellenantrieb gehören seit Jahrzehnten zum Stande der Technik. Alle bisher bekannten Fahrräder mit Wellenantrieb mußten entweder sehr verbindungssteife Rahmen, die dadurch schwer wurden, oder sehr stabil ausgeführte Kegelräder aufweisen, damit die im normalen Betrieb auftretenden Verwindungen nicht zu Brüchen an den Kegelrädern führten. Außerdem mußten zum Ausbau des Hinterrades zwecks Reparatur des Schlauches oder der Bereifung Rahmenteile oder Halteteile abgeschraubt, gelöst oder weggeschwenkt werden.

Aus der BE-A-456 288 ist ein Fahrrad mit Wellenantrieb entnehmbar, bei dem das auf der Radnabe gelagerte Kegelrad mit dem auf der Antriebswelle befestigten Kegelrad zusammenwirkt. Das Radnaben-Kegelrad ist in einem als Bestandteil des Rahmens ausgebildeten Gehäuse untergebracht. Diese Lösung weist jedoch den Nachteil auf, daß bei jedem Montagefall, sowohl bei der Herstellung als auch im Betrieb, das Kegelräderpaar der Radnabe gegeneinander erneut ausgerichtet werden muß. Eine zeitraubende, umständliche und teuere Maßnahme. Der Gegenstand des BE-A-456 288 entspricht dem Oberbegriff des Anspruchs 1.

Die Erfindung hat sich die Aufgabe gestellt, ein Fahrrad mit Wellenantrieb so zu verbessern, daß das Fahrrad geringes Gewicht aufweist, und der Hinterradausbau nur durch Lösen der Hinterachsbefestigung vorgenommen werden kann. Diese Aufgabe ist durch die kennzeichnenden Merkmale des Anspruchs 1 gelöst.

Bei einem Fahrrad mit Wellenantrieb, bei welchem die nahe der Tretlagerwelle angeordnete Antriebseinheit mit einer Abtriebseinheit, die aus einem Gehäuse und einem Kegelradgetriebe besteht, über eine steckbar ausgebildete Welle verbunden ist, wird die Aufgabe erfindungsgemäß dadurch gelöst, daß die Abtriebseinheit ein unmittelbar auf der Hinterrad-Nabe befestigtes und gleichzeitig als Lagerung für das Gehäuse ausgebildetes Kegelrad aufweist und mit einem im Gehäuse gelagerten Kegelrad versehen ist.

Als vorteilhaft hat sich erwiesen, daß mindestens einer der beiden ungeteilten, fest mit dem Fahrradrahmen verbundenen, die Hinterradnabe aufnehmenden Gabelholme ein der Form des Abtriebs-Gehäuses angepaßtes Ausfall-Ende, sowie für die Abtriebseinheit und für die Bremse eine Abstützung aufweist. Weiterhin ist es von Vorteil, daß die Achse des Hinterrades durchgehend ausgebildet und in den Ausfall-Enden der Gabelholme mittels Klemmverschraubung befestigt ist.

Durch die Anordnung eines Stirnräderpaares als Vorgelege in der Antriebseinheit werden die durch das Treten der Pedale hervorgerufenen Verwindungen des Rahmens in dem Vorgelege eliminiert und werden nicht auf das Kegelradgetriebe weitergeleitet. Das Kegelradgetriebe kann somit schmal und leichtbauend ausgebildet sein. Die Anbringung des Gehäuses und eines Kegelrades unmittelbar auf der Hinterradnabe hat zur Folge, daß das Hinterrad lediglich durch Lösen der Klemmverschraubung aus seiner Halterung herausgenommen werden kann, ohne daß dazu Rahmenteile verschwenkt, gelöst oder verschoben werden müssen. Ebenfalls kann jede handelsübliche Nabe nach Austausch des Kettenrades durch ein angepaßtes Kegelrad in diesem Fahrrad Verwendung finden.

Auf der Zeichnung ist eine beispielsweise Ausführungsfrom des Erfindungsgegenstandes schematisch dargestellt.

Es zeigt:

Figur 1 eine Seitenansicht des erfindungsgemäßen Fahrrades mit Wellenantrieb,

Figur 2 eine teilweise geschnittene Draufsicht auf die Antriebseinheit und Abtriebseinheit nach Figur 1,

Figur 3 eine Perspektivische Darstellung der im Fahrradrahmen befestigten Abtriebseinheit.

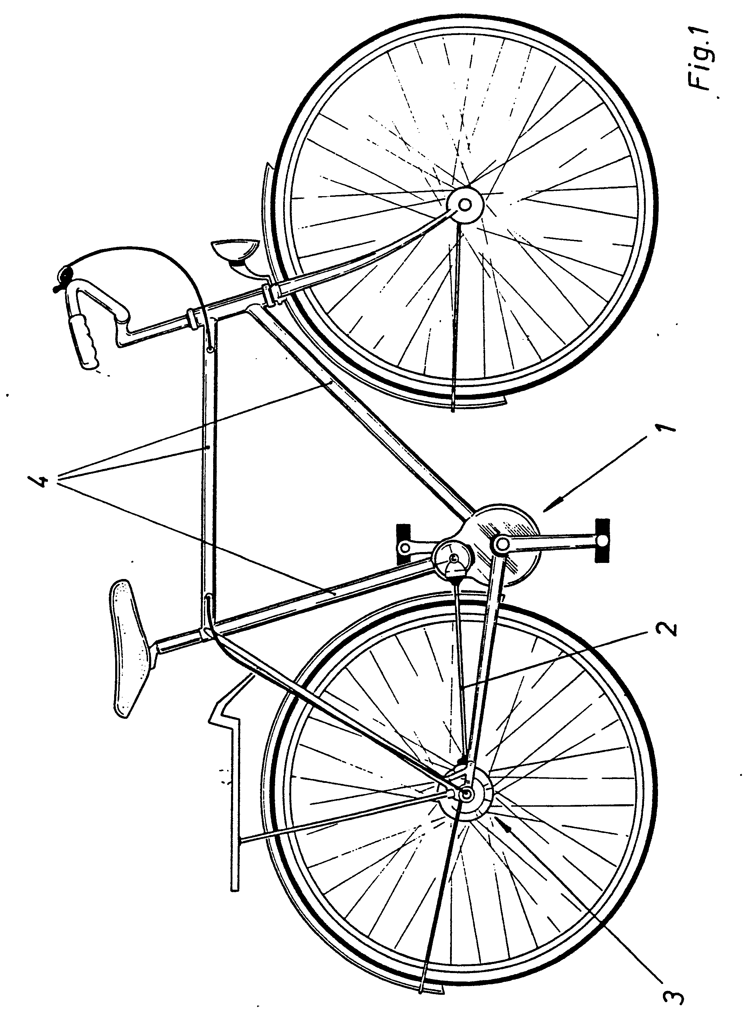

Wie aus Figur 1 ersichtlich, geht von der die Tretkurbeln aufweisenden Antriebseinheit 1 eine Welle 2 zu der am Hinterrad befindlichen Abtriebseinheit 3. Die Antriebseinheit 1 ist in einem im Fahrradrahmen 4 integrierten Gehäuse 5 untergebracht und besteht aus der die Tretkurbeln tragenden Tretlagerwelle 6, auf der ein Zahnrad 7 befestigt ist, welches mit einem auf einer Zwischenwelle 8 gelagerten Zahnrad 9 in Eingriff steht. Die Antriebseinheit 1 besteht weiterhin aus einem Kegelradgetriebe, dessen eines Kegelrad 10 an dem Zahnrad 9 befestigt und auf der Zwischenwelle 8 gelagert ist, während das zweite Kegelrad 11 des Kegelradgetriebes im Gehäuse 5 gelagert ist.

Mit dem Kegelrad 11 steht das eine Ende der Welle 2 in Wirkverbindung. Mindestens ein Ende der Welle 2 ist steckbar ausgebildet. Die Steckverbindung zwischen Welle 2 und Kegelrad 11, welche nachfolgend für das dargestellte Ausführungsbeispiel erläutert wird, sollte, unabhängig von der gewählten Ausführungsform der Steckverbindung, geringe Bewegungen der Welle 2, wie sie beim praktischen Gebrauch eines Fahrrades auftreten, ermöglichen (Kardangelenk).

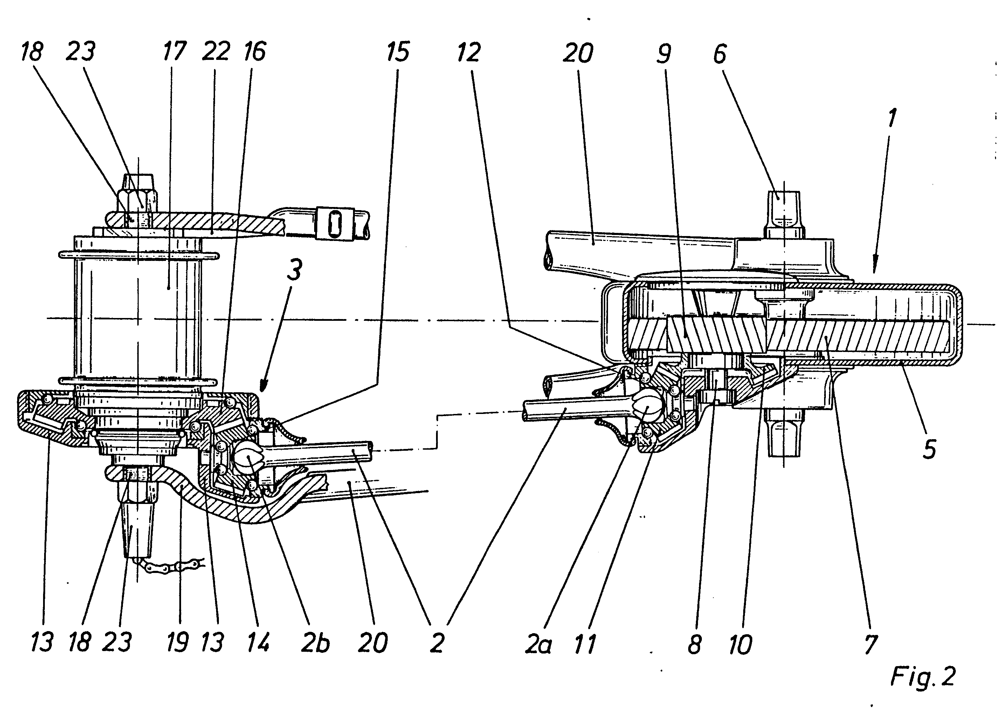

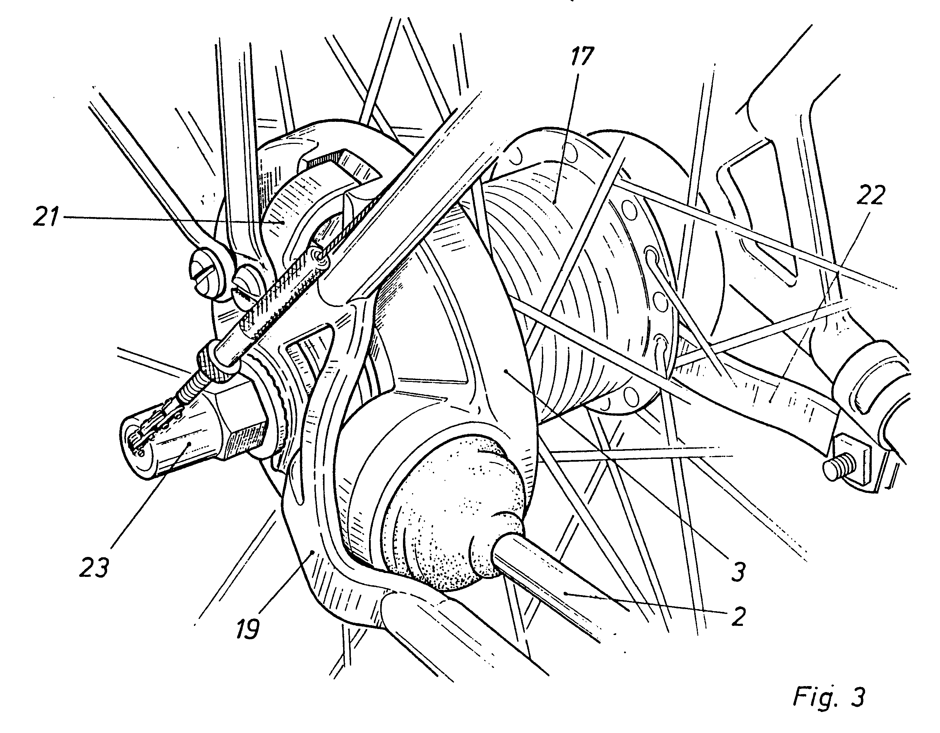

In der Darstellung nach Figur 2 ist an bzw. in dem Zentrum des Kegelrades 11 eine hülsenförmige Sechskantausnehmung als Wellenaufnahme 12 vorgesehen, in die das kugelförmig verdickte Ende 2a der Welle 2 einsteckbar ist. Das Ende 2a ist der Form der Aufnahme 12 angepaßt und weist ebenfalls Sechskantflächen auf, wobei die Kugelform die Kraftübertragung unter einem Winkel gestattet. Zweckmäßigerweise ist auch das Ende 2b der Welle 2, welches mit dem im Gehäuse 13 der Abtriebseinheit 3 gelagerten Kegelrad 14 in Wirkverbindung steht, gleich dem Ende 2a ausgebildet, so daß auch die Wellenaufnahme 15 an bzw. in dem Kegelrad 14 der Aufnahme 12 entspricht. Selbstverständlich können auch die Enden 2a, 2b der Welle 2 mit Ausnehmungen und die Kegelräder 11 und 14 mit kugelförmigen Ansätzen versehen sein, ebenso wie kreuz-, zapfen-, schlitzförmige drei- oder bis zu vieleckigen Ausbildungen der Wellenenden bzw. Wellenaufnahmen vorgesehen werden können. Während das Kegelrad 14 im Gehäuse 13 der Abtriebseinheit 3 gelagert ist, Figur 2 (links), ist das mit 14 in Eingriff stehende Kegelrad 16 ebenso wie das Gehäuse 13 auf der Hinterradnabe 17 angeordnet. Die Nabe 17 ist eine allgemein bekannte Freilauf-, Freilauf/Rücktritt- oder Freilauf/Rucktritt/Schalt-Nabe, deren durchgehende Achse 18 in den Ausfall-Enden 19 der fest mit dem Fahrradrahmen 4 verbundenen Gabelholme 20 mittels bekannter Klemmverschraubung 23 befestigt ist. Mindestens das der Abtriebseinheit 3 zugewandte Ausfall-Ende 19 des Gabelholmes 20 weist eine Form auf, die der Gehäuseform 13 angepaßt ist (Figur 3). In der Zeichnung ist die Abstützung 21 für die Antriebseinheit 3 am Ausfall-Ende 19, die Abstützung 22 für die Bremse am Gabelholm 20 angeordnet.

Nach dem Lösen der Klemmverschraubung 23 und gegebenenfalls Lösen des Schaltungszuges und der Bremsabstützung 22 wird das komplette Hinterrad einfach aus dem Rahmen 4 bzw. 20 herausgezogen. Dabei trennt sich die Welle 2 von der Abtriebseinheit 3. Ebenso einfach wird das komplette Hinterrad eingeschoben, die Welle 2 eingesteckt und die Achse 18 mittels Klemmverschraubung 23 befestigt.

## Patentansprüche

1. Fahrrad mit Wellenantrieb, bei welchem die nahe der Tretlagerwelle (6) angeordnete Antriebseinheit (1) mit einer Abtriebseinheit (3), die aus einem Gehäuse (13) und einem Kegelradgetriebe (14, 16) besteht, über eine steckbar ausgebildete Welle (2) verbunden ist, dadurch gekennzeichnet, daß die von der steckbaren Welle (2) trennbar ausgebildete Abtriebseinheit (3) ein unmittelbar auf der Hinterradnabe (17) befestigtes und gleichzeitig als Lagerung für das Gehäuse (13) ausgebildetes Kegelrad (16) aufweist und mit einem im Gehäuse (13) gelagerten Kegelrad (14) versehen ist.

2. Fahrrad mit Wellenantrieb nach Anspruch 1, dadurch gekennzeichnet, daß mindestens einer der beiden ungeteilten, fest mit dem Fahrradrahmen (4) verbundenen, die Hinterradnabe (17) aufnehmenden Gabelholme (20) ein der Form des Abtriebs-Gehäuses (13) angepaßtes Ausfall-Ende (19) sowie für die Abtriebseinheit (3) und für die Bremse eine Abstützung (21 bzw. 22) aufweist.

3. Fahrrad mit Wellenantrieb nach Anspruch 1 und 2, dadurch gekennzeichnet, daß die Achse (18) des Hinterrades durchgehend ausgebildet und in den Ausfall-Enden (19) der Gabelholme (20) mittels Klemmverschraubung (23) befestigt ist.

## Claims

1. Bicycle with shaft drive, the driving unit (1) of which is arranged close to the pedal spindle and is connected by means of a plug-in type shaft (2) to a driven unit (3), consisting of a housing (13) and a bevel gear (14, 16), characterized by the fact that the driven unit (3), which can be separated from the plug-in type shaft (2) has a bevel wheel (16) that is directly fastened on the hub of the rear wheel (17) and serves as a bearing for the housing (13) and has a bevel wheel (14) borne in the housing (13).

2. Bicycle with shaft drive according to claim 1, characterized by the fact that at least one of the two one-piece forked rods (20) that are firmly connected to the bicycle frame (4) and guide the rear wheel hub (17) has an end piece adapted to the shape of the housing of the driven unit (13) and has a support (21 or 22) for the driven unit (3) and for the brake.

3. Bicycle with shaft drive according to claims 1 and 2, characterized by the fact that the axle (18) of the rear wheel is one-piece and is fastened with clamping screws in the end pieces (19) of the forked rods (20).

## Revendications

1. Bicyclette avec entraînement par arbre où l'unité d'entraînement (1) se trouvant près de l'arbre du palier de pédalier (6) est liée avec une unité entraînée (3) se composant d'un boîtier (13) et d'un engrenage à roues coniques (14, 16) au moyen d'un arbre brochable (2), caractérisée par le fait que l'unité d'entraînement (3) pouvant être séparée de l'arbre brochable (2) est pourvue d'une roue conique (16) fixée directement sur le moyeu de la roue arrière (17) et servant simultanément de palier pour le boîtier (13) ainsi que d'une roue conique (14) logée dans le boîtier (13).

2. Bicyclette avec entraînement par arbre selon la revendication 1, caractérisée par le fait qu'au moins une des deux tiges de fourche en une pièce, fixées au cadre de bicyclette (4) et récevant le moyeu de la roue arrière, est prévue d'une extrémité (19) adaptée à la forme du boîtier de l'unité entraînée (13) ainsi que d'un support (21 et 22) pour l'unité d'entraînement (3) et le frein.

3. Bicyclette avec entraînement par arbre selon la revendication 1 et 2, caractérisée par le fait que l'arbre (18) de la roue arrière se compose d'une seule pièce et est fixé aux extrémités (19) des tiges de fourche (20) au moyen d'un raccord boulonné (23).

Fig.1

0 105 949

18  23    17  22  16         15      12      20        9      6

1

3

13  18  23    19  13  14  2b  20    2    2a  11    8  10        7

0 105 949

Fig. 2

Fig. 3

0 105 949